(19) Europäisches Patentamt
European Patent Office
Office européen des brevets

(11) **EP 3 088 856 B1**

(12) **EUROPÄISCHE PATENTSCHRIFT**

(45) Veröffentlichungstag und Bekanntmachung des Hinweises auf die Patenterteilung:
**27.11.2019   Patentblatt 2019/48**

(51) Int Cl.:
*G01J 5/02* *(2006.01)*        *G01J 5/20* *(2006.01)*

(21) Anmeldenummer: **16167646.5**

(22) Anmeldetag: **29.04.2016**

(54) **STRAHLUNGSDETEKTOR, ARRAY VON STRAHLUNGSDETEKTOREN UND VERFAHREN ZUR HERSTELLUNG EINES STRAHLUNGSDETEKTORS**

RADIATION DETECTOR, ARRAY OF RADIATION DETECTORS AND METHOD FOR PRODUCING A RADIATION DETECTOR

DETECTEUR DE RAYONNEMENT, ENSEMBLE DE DETECTEURS DE RAYONNEMENT ET PROCEDE DE FABRICATION D'UN DETECTEUR DE RAYONNEMENT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **30.04.2015   DE 102015208073**

(43) Veröffentlichungstag der Anmeldung:
**02.11.2016   Patentblatt 2016/44**

(73) Patentinhaber: **Fraunhofer-Gesellschaft zur Förderung der angewandten Forschung e.V.**
**80686 München (DE)**

(72) Erfinder:
• **WEILER, Dirk**
  **44627 Herne (DE)**
• **MUCKENSTURM, Kai-Marcel**
  **47138 Duisburg (DE)**
• **HOCHSCHULZ, Frank**
  **48683 Ahaus (DE)**

(74) Vertreter: **Schenk, Markus et al**
**Schoppe, Zimmermann, Stöckeler**
**Zinkler, Schenk & Partner mbB**
**Patentanwälte**
**Radlkoferstrasse 2**
**81373 München (DE)**

(56) Entgegenhaltungen:
EP-A1- 1 072 875        EP-A1- 2 293 034
DE-C1- 10 129 846       US-A1- 2014 091 217

**Beschreibung**

Die vorliegende Erfindung bezieht sich auf einen Strahlungsdetektor, ein Array aus einer Mehrzahl von Strahlungsdetektoren und einem Herstellungsverfahren zum Herstellen eines Strahlungsdetektors, wobei es sich bei dem Strahlungsdetektor beispielsweise um ein Bolometer handeln kann.

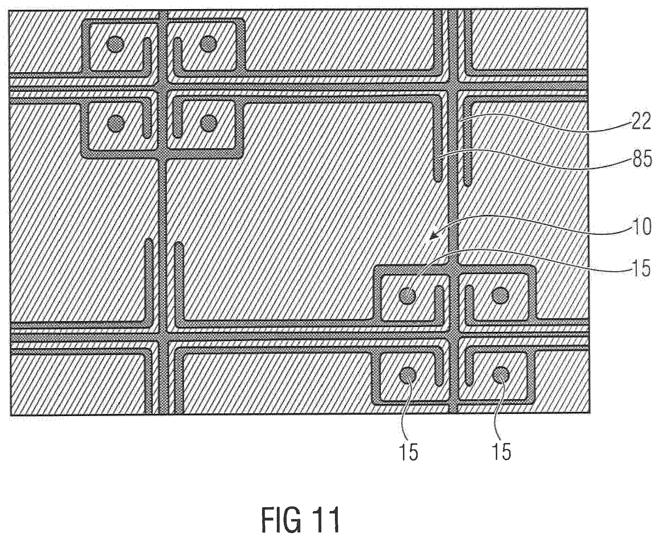

Ungekühlte Widerstandsmikrobolometer (im weiteren Verlauf als Mikrobolometer gekennzeichnet)-Arrays können zur Detektion von ferninfraroter Strahlung (8 μm-14 μm) verwendet werden und fallen ebenfalls unter den Begriff infrared focal plane arrays (IRFPA). Einzelne Mikrobolometer, wie in Fig. 11 gezeigt, können durch eine Membran 10 gekennzeichnet sein, welche von zwei Metallkontakten 15 mittels dünner Stege über dem Substrat 20 im Vakuum aufgehängt und mittels der Stege 22 (in Fig. 12 gezeigt) thermisch isoliert ist. Grundlegend besteht die Membran aus einer Absorber- 25 sowie einer Sensorschicht 30. Um eine möglichst geringe Reflexion der einfallenden infraroten Strahlung zu gewährleisten, kann der Schichtwiderstand der Absorberschicht 25 an den Wellenwiderstand von Vakuum (ca. 377 Ohm/sq) angepasst sein. Weiterhin kann sich unterhalb der Membran eine Metallschicht (Reflektor) 35 auf dem Substrat 20 befinden, wodurch die zum Teil transmittierte Strahlung zurückreflektiert und anschließend wieder von der oberen Absorberschicht absorbiert wird. Die Kavität 40 zwischen der Absorberschicht 25 und dem unteren Reflektor bildet einen optischen Resonator. Der Abstand kann so gewählt werden, dass der optische Weg (nd) ein ungerades Vielfaches von einem Viertel der zu detektierenden Hauptwellenlänge λ ist, um die Resonatorbedingung zu erfüllen (Gl.1). Der optische Weg setzt sich zusammen aus der Summe der Schichtdicken gewichtet mit den Brechungsindizes der Medien innerhalb der Kavität (Gl.2). Bei einem Körper mit einer Temperatur von z. B. 300 K wäre das Maximum der spektralen Strahldichte bei etwa λ = 10 μm. Hieraus resultiert ein optischer Weg von nd = 2.5 μm (k = 0).

$$nd = (2k+1)\frac{\lambda}{4} \quad (k = 0, 1, 2 \dots) \qquad (Gl.1)$$

$$nd = \sum n_i d_i \qquad (Gl.2)$$

Aufgrund der Absorption der einfallenden infraroten Strahlung kann sich die thermisch isolierte Membran 10 erwärmen, was beispielsweise eine Änderung des elektrischen Widerstandes der Sensorschicht 30 zur Folge haben kann. Die Temperaturänderung der Membran 10 ist dabei abhängig von der thermischen Isolierung mittels der Stege 22 sowie von der Energie der absorbierten Strahlung und ist in der Regel mehrere Größenordnungen kleiner als die Änderung der Strahlertemperatur. Die Widerstandsänderung der Sensorschicht kann dann mit Hilfe einer Ausleseschaltung (engl.: read out circuit, ROIC) bestimmt werden.

Ein entscheidender Performanceindikator für Mikrobolometer ist die sogenannte noise equivalent temperature difference (NETD). Dieser Faktor ist definiert als die Temperaturänderung eines Objektes, die eine Änderung des Messsignales generiert, welches dem Rauschen des Systems entspricht und ist somit ein Maß für die Empfindlichkeit des Sensors (Gl.3).

$$NETD = \frac{4F^2}{A\varepsilon\pi\frac{dL}{dT}}\frac{\sqrt{\overline{u_n^2}}\,g_{th}}{U_{bias}TCR} \qquad (Gl.3)$$

F ist die Blendenzahl, A die Absorberfläche, ε der Emissionskoeffizient, L die Strahldichte und T die Temperatur des Objektes, $\overline{u_n^2}$ das Quadrat der gesamten Rauschspannung, $g_{th}$ der thermische Leitwert und $U_{bias}$ die Biasspannung.

Aus Gl.3 wird ersichtlich, dass die NETD u. a. maßgeblich von der thermischen Isolierung der Membran bzw. dem entsprechenden thermischen Leitwert $g_{th}$ beeinflusst wird. Im Allgemeinen ist die Membran nur durch die Aufhängung an den Metallkontakten thermisch schlecht vom Substrat isoliert. Der resultierende thermische Leitwert ist in diesem Fall nicht ausreichend klein, um eine gute Performance zu erzielen, da die Kontaktröhrchen aus Prozess- und Stabilitätsgründen aus dicken Metallbeschichtungen bestehen und somit die entstehende Wärme in der Membran relativ gut leiten. Der Grenzwert für die NETD sollte beispielsweise bei deutlich weniger als 100 mK liegen, kann jedoch auch mehr betragen (kleinere NETD-Werte entsprechen einer besseren Performance).

In herkömmlichen Mikrobolometern wird eine signifikante Verbesserung der thermischen Isolierung bzw. Reduzierung des thermischen Leitwerts durch zusätzliche Verbindungselemente, den Stegen 22, zwischen der aufgehängten Membran und den Metallkontakten realisiert. Der thermische Leitwert der Stege lässt sich bestimmen zu

$$g_{Stege} = 2 \frac{b_{Steg} d_{Steg}}{l_{Steg}} \sum \lambda_i \qquad\qquad (Gl.4)$$

wobei $\lambda_i$ die thermische Leitfähigkeit der einzelnen Stegmaterialien, $b_{Steg}$ und $d_{Steg}$ die Breite und Dicke der einzelnen Stegmaterialien und $l_{Steg}$ die Länge der Stege ist. Um eine gute thermische Isolierung zu erzielen sollte demnach die Querschnittsfläche der Stege möglichst klein sein und die Stege aus Materialien bestehen, welche eine geringe thermische Leitfähigkeit besitzen. Bezüglich der Wärmeisolierung ist der Anteil der Metallkontakte meist gegenüber den der Stege zu vernachlässigen. Weiterhin kann die thermische Isolierung durch die Wärmestrahlung an die Umgebung beeinflusst werden. Da die Infrarotdetektoren jedoch im Vakuum betrieben werden, ist der Einfluss ebenfalls meist sehr gering, sodass insgesamt die thermische Leitfähigkeit der Stege dominiert.

Der Trend in der Entwicklung der Mikrobolometer bewegt sich hin zu immer kleineren Pixelgrößen für hochauflösende IRFPAs, bei gleichzeitig steigenden Anforderungen an die Performance. Derzeit werden in der Regel Mikrobolometerarrays mit einem Pixelpitch (dt.: Pixelmittenabstand) von 17 μm gefertigt. Es ist jedoch abzusehen, dass sich in den nächsten Jahren eine neue Generation mit einem Pixelpitch von 12 μm durchsetzen kann. Eine Skalierung des Pixelpitch von 17 μm auf 12 μm bedeutet eine Halbierung der Absorberfläche 25. Generell kann eine Verkleinerung des Pixelpitch aufgrund der Reduzierung der Absorberfläche 25 einen massiven Einfluss auf die Performance der Mikrobolometer haben.

Die effektive Absorberfläche 25 kann aufgrund der benötigten Fläche zur Realisierung der Stege eingeschränkt sein. Abhängig vom Design und Aufbau der Stege bzw. Zielwert des thermischen Leitwerts kann die beanspruchte Fläche der Stege 22 unterschiedlich groß sein. Die Absorberfläche 25 kann jedoch gleichermaßen einen Einfluss auf die Performance haben wie der thermische Leitwert. Wird nun die Pixelfläche um einen gewissen Faktor verkleinert, könnte theoretisch das gesamte Mikrobolometer dementsprechend skaliert werden, sodass die Verhältnisse der einzelnen Flächen (Stege 22, Kontakte 15, Absorberfläche 25) und Abstände zueinander immer gleich bleiben. Der Performanceverlust wäre dann u. a. durch den Skalierungsfaktor bestimmt. Das Problem bei der Skalierung ist jedoch, dass hierbei schnell die Grenzen der Lithographie erreicht werden können. Typischerweise wird für die Herstellung von Mikrobolometer-Arrays eine Stepper-Lithographie mit einer Auflösung von 0,35 μm verwendet. Oftmals werden bereits in aktuellen aber auch in älteren Mikrobolometergenerationen (17 μm, 25 μm, 35 μm) Strukturgrößen am Limit dieser Auflösung verwendet, wie z. B. bei den Stegbreiten und - Abständen. Zum anderen können auch aus Prozess- und Stabilitätsgründen die Kontaktlöcher und oberen Kontaktflächen nicht beliebig klein skaliert werden, sodass auch hier ein Limit existiert. Aufgrund dieser Problematik beanspruchen besonders die Stegflächen relativ zur Pixelgröße immer mehr Platz bei einem festen thermischen Leitwert (vorgegeben durch Konzept), wodurch die effektive Absorberfläche zusätzlich verkleinert und die Performance stark gemindert wird.

In der Literatur wurde eine weitere Anordnung präsentiert, bei der die Absorberschicht über die gesamte Pixelfläche schirmartig aufgespannt wird. Eine derartige Anordnung wird two-layer- oder auch speziell Umbrella-Design genannt. Hiermit ist es ebenso möglich Bolometer mit einer großen Absorberfläche bei gleichzeitiger guter thermischer Isolierung herzustellen. Der Nachteil hierbei ist jedoch, dass sich die Stege und die Sensorschicht weiterhin in einer Ebene befinden. Die thermische Isolierung ist demnach limitiert durch die freie, zur Verfügung stehende, Pixelfläche. Weiterhin wird die Resonatorbedingung in dem Bereich der Aufhängung des Absorbers nicht erfüllt, was sich negativ auf die Absorption auswirkt. Der Herstellungsprozess von two-layer-Bolometern (Stegen und Absorber nicht in einer Ebene) ist ebenfalls deutlich aufwendiger.

In der EP 1 072 875 B1 wird ein Infrarot-Strahlendetektor vom Wärmetyp mit einem Wärme-Isolieraufbau beschrieben, der eine Vielzahl von Bildelementen aufweist, wobei jedes Bildelement Folgendes aufweist: einen Schaltkreis, der in einem Substrat für jedes Bildelement ausgebildet ist; einen Licht-Empfangsabschnitt, der Infrarot-Strahlen in eine Veränderung des Widerstands oder eine Veränderung der Ladungsmenge umwandelt, wobei der Schaltkreis ein Spannungssignal aus der Veränderung des Widerstands oder der Veränderung der Ladungsmenge erzeugt; und einen Träger, die den Licht-Empfangsabschnitt von dem Substrat mechanisch stützen, um einen Spalt zwischen dem Licht-Empfangsabschnitt und dem Substrat zu bilden, und die den Licht- Empfangsabschnitt elektrisch mit dem Schaltkreis verbinden; wobei jeder Träger Folgendes aufweist: einen Verdrahtungsleitungsfilm aus einer Ti-Legierung, welche den Licht-Empfangsabschnitt mit dem Schaltkreis verbindet; und einen Schutz-Isolierfilm, der den Verdrahtungsleitungsfilm umgibt. Der Träger ist länglich, um sich zwischen eine Vielzahl von Bildelementen zu erstrecken.

DE 10129846 C1 beschreibt eine Schaltungsanordnung, die auf einem ersten Schaltungsbauelement eine erste Schicht aus einem ersten isolierenden und/oder halbleitenden Material mit einem Loch aufweist, das sich bis zu dem ersten Schaltungsbauelement erstreckt. In dem Loch ist auf einem ersten metallisch leitenden Spacer ein zweiter isolierender Spacer ausgebildet. Auf dem zweiten Spacer ist ein Schichtsystem mit einem metallisch leitenden Material aufgebracht, und auf der ersten Schicht und dem ersten und zweiten metallisch leitenden Material ist ein zweites Schaltungsbauelement aufgebracht.

Die US2014091217 beschreibt ein Mikrobolometer-Detektor mit einer verbesserten Stützstruktur. Der Mikrobolometerdetektor umfasst ein Substrat und eine Stützstruktur, die mindestens einen Pfosten umfasst, der mit dem Substrat im Wesentlichen vertikal verbunden ist und von diesem vorsteht. Der Mikrobolometerdetektor umfasst auch eine Plattform, die über dem Substrat gehalten ist und einen zentralen Bereich umfasst, der im Wesentlichen vertikal mit dem mindestens einen Pfosten der Tragstruktur und einem den zentralen Bereich umgebenden Umfangsbereich ausgerichtet ist, wobei die Plattform von der Tragstruktur von dem zentralen Bereich gestützt wird. Das Mikrobolometer enthält ferner mindestens einen Thermistor, der sich im Umfangsbereich der Plattform befindet. Die Stützstrukturen eignen sich besonders gut zur Unterstützung von relativ großen Plattformen von Mikrobolometer-Detektoren, insbesondere für Fern-Infrarot- und Terahertz-Detektion und spektroskopische Anwendungen.

EP2293034A1 beschreibt ein Widerstandsmaterial für ein Bolometer, ein Bolometer für einen Infrarotdetektor unter Verwendung des Materials und ein Verfahren zur Herstellung des Bolometers. In dem Widerstandsmaterial ist mindestens ein aus der Gruppe bestehend aus Stickstoff (N), Sauerstoff (O) und Germanium (Ge) ausgewähltes Element in Antimon (Sb) enthalten. Das Widerstandsmaterial hat überlegene Eigenschaften wie einen hohen Temperaturkoeffizienten des Widerstands (TCR), einen niedrigen spezifischen Widerstand, eine geringe Rauschkonstante und wird leicht in einer Dünnfilmstruktur durch Sputtern gebildet, die typischerweise in einem komplementären Metalloxidhalbleiter-(CMOS-) Verfahren verwendet wird, so dass es als Widerstand für das Bolometer für einen ungekühlten Infrarotdetektor verwendet werden kann und sich somit ein Infrarotdetektor mit überlegener Temperaturgenauigkeit ergibt.

Wünschenswert wäre demnach ein Strahlungsdetektor mit einer verbesserten Membranflächenausbeute.

Diese Aufgabe wird durch den Gegenstand der unabhängigen Patentansprüche gelöst.

Der vorliegenden Erfindung liegt die Idee zugrunde, dass in dem Fall einer Membran eines Strahlungsdetektors, die über einen Abstandshalter derart über einem Substrat aufgehängt ist, dass der Abstandshalter einen in der Membran gebildeten Strahlungssensor elektrisch kontaktieren, der Abstandshalter zusätzlich als eine thermische Isolation fungieren kann, wodurch Einbußen in der Membranflächenausbeute aufgrund von Stegen zur thermischen Isolation reduziert oder sogar eliminiert werde können. Die thermische Isolation kann durch eine sehr dünne und gleichmäßige Schicht eines Kontaktmaterials im Abstandshalter ermöglicht werden, die beispielsweise mittels ALD (Atomic Layer Deposition / Atomlagenbeschichtung) erzeugt wird. Die ALD-Schicht wird beispielsweise auf Seitenkanten einer mit einem Ätzprozess wie z. B. einem DRIE-Prozess, beispielsweise einem Bosch-Prozess oder einem Kryo-Prozess strukturierten Opferschicht erzeugt. Die Bildung eines langen und dünnen Abstandshalters wirkt sich ebenfalls positiv auf die thermische Isolation aus.

Gemäß einem Ausführungsbeispiel kann zwischen dem Substrat und der Membran ein Reflektor angeordnet sein. Dieser kann auf dem Substrat aufliegen oder mittels weiterer Abstandshalter über dem Substrat aufgehängt sein. Hierdurch kann unabhängig von einer Länge des Abstandshalters, an dem die Membran aufgehängt ist, der Abstand zwischen Reflektor und Membran so angepasst werden, dass dieser ein ungerades Vielfaches von einem Viertel einer zu detektierenden Hauptwellenlänge beträgt. In anderen Worten ist es möglich, bei Beibehaltung eines gewünschten Membran-Reflektor-Abstandes dennoch die Länge des Abstandshalters groß zu wählen, um eine ausreichende thermische Isolation zu gewährleisten.

Gemäß einer weiterer Ausführungsform können zusätzlich zur thermischen Isolation mittels des Abstandshalters auch ein Steg an der Membran angeordnet sein. Der Steg kann die thermische Isolation noch erhöhen, sofern der zu erzielende thermische Leitwert nicht ausschließlich mittels der Abstandshalter erreicht werden kann. Gegenüber einem nicht als thermischem Isolator fungierenden Abstandshalter ist der Flächenverbrauch eines solchen Stegs aber reduziert und damit die Membranflächenausbeute erhöht. Ferner kann auf einen üblichen, zweiten Steg verzichtet werden, da die Membran nur an einem Abstandshalter aufgehängt ist.

Ein weiteres Ausführungsbeispiel beschreibt einen Strahlungsdetektor mit einem funktionalen Abstandshalter, der beide Pole der Membran kontaktiert. Ferner kann zur Stabilisierung ein zweiter bzw. mehrere weitere Abstandshalter zwischen Membran und Substrat angeordnet werden. Die weiteren Abstandshalter können beispielsweise ein thermisch isolierendes Material, wie z. B. ein Oxid umfassen.

Vorteilhafte Ausgestaltungen der vorliegenden Anmeldung sind Gegenstand der abhängigen Patentansprüche. Bevorzugte Ausführungsbeispiele der vorliegenden Anmeldung werden nachfolgend Bezug nehmen auf die beiliegenden Zeichnungen näher erläutert, unter welchen

Fig. 1     eine schematische Darstellung eines Strahlungsdetektors mit einem Abstandshalter zeigt, wobei eine Membran über den Abstandshalter über einem Substrat aufgehängt ist;

Fig. 2a     eine schematische Darstellung eines lateralen Schnittes durch einen Abstandshalter zeigt, der aus zwei Schichten verschiedener Materialien besteht und innen hohl ist;

Fig. 2b     eine schematische Darstellung einer Seitenansicht eines Abstandshalters zeigt, der aus zwei Schichten verschiedener Materialien besteht und innen hohl ist;

Fig. 3a    eine schematische Darstellung eines Querschnitts eines Strahlungsdetektors zeigt, wobei auf dem Substrat ein Reflektor angeordnet ist und die Kontaktierung sowie die Schichten der Membran gezeigt werden;

Fig. 3b    eine schematische Darstellung eines Querschnitts eines Strahlungsdetektors zeigt, wobei auf dem Substrat ein Reflektor angeordnet ist und die Kontaktierung sowie die Schichten der Membran gezeigt werden;

Fig. 3c    eine schematische Darstellung eines Querschnitts eines Strahlungsdetektors zeigt, wobei das Substrat zwei Metallisierungsebenen aufweist, die den Abstandshalter elektrische kontaktieren, um einen vertikalen Stromfluss zu ermöglichen;

Fig. 3d    eine schematische Darstellung eines Querschnitts eines Strahlungsdetektors zeigt, wobei das Substrat zwei Metallisierungsebenen aufweist, die den Abstandshalter elektrische kontaktieren, um einen lateralen Stromfluss zu ermöglichen;

Fig. 4    eine schematische Darstellung einer Seitenansicht eines Strahlungsdetektors zeigt, bei dem der Reflektor an weiteren Abstandshaltern über dem Substrat aufgehängt ist;

Fig. 5    eine schematische Darstellung einer Seitenansicht eines Strahlungsdetektors zeigt, wobei die Membran über einen Steg an dem Abstandshalter aufgehängt ist;

Fig. 6    eine schematische Darstellung einer Seitenansicht eines Arrays von Strahlungsdetektoren zeigt;

Fig. 7    eine schematische Darstellung einer Seitenansicht eines Strahlungsdetektors zeigt, wobei die Membran über Abstandshalter auf einem Substrat aufgehängt ist und die Abstandshalter durch eine Oxidschicht stabilisiert sind;

Fig. 8a    eine schematische Darstellung einer Seitenansicht eines Strahlungsdetektors wie in Fig. 1;

Fig. 8b    eine schematische Darstellung eines lateralen Schnittes durch einen runden Abstandshalter, der innen hohl ist;

Fig. 8c    eine schematische Darstellung eines lateralen Schnittes durch einen runden Abstandshalter, der innen nicht hohl ist;

Fig. 8d    eine schematische Darstellung eines lateralen Schnittes durch einen runden Abstandshalter, der innen hohl ist, wobei zwei Kontakte in einem Kreisring geführt werden;

Fig. 8e    eine schematische Darstellung eines lateralen Schnittes durch einen eckigen Abstandshalter, der innen hohl ist;

Fig. 9    ein schematisches Blockdiagramm eines Verfahrens zur Herstellung eines Strahlungsdetektors;

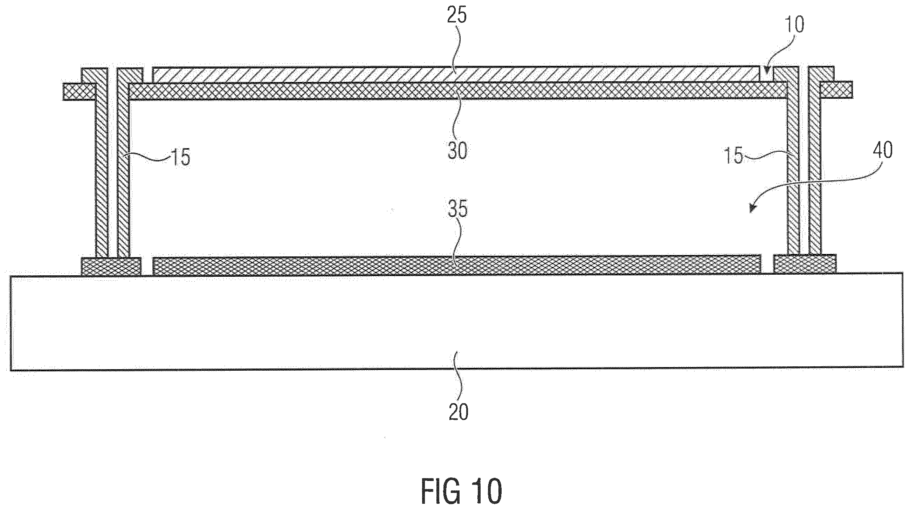

Fig. 10    eine schematische Darstellung eines Mikrobolometers als Stand der Technik zeigt;

Fig. 11    eine schematische Darstellung einer Draufsicht auf eine Membran als Stand der Technik zeigt, wobei die Membran über Stege an Metallkontakten aufgehängt ist.

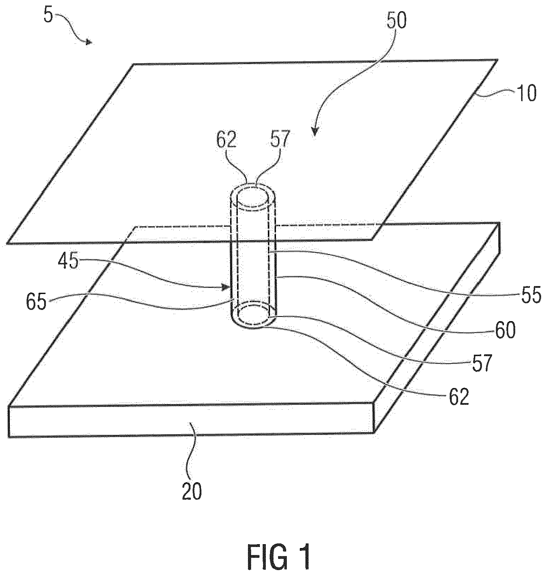

Fig. 1 zeigt eine schematische Darstellung einer Seitenansicht eines Strahlungsdetektors 5. Der Strahlungsdetektor 5 umfasst eine Membran 10, die über einen Abstandshalter 45 oberhalb eines Substrats 60 aufgehängt ist, wobei der Abstandshalter 45 einen in der Membran 10 gebildeten Strahlungssensor gegenüber dem Substrat 20 thermisch isoliert. Der Abstandshalter umfasst eine erste Schicht 55, die elektrisch leitend ist und einen ersten Pol 57 des Strahlungssensors 50 und des Substrats 20 kontaktiert, sowie ferner eine zweite Schicht 60, die elektrisch leitend und von der ersten elektrisch leitfähigen Schicht 55 elektrisch isoliert ist und einen zweiten Pol 62 des Strahlungssensors 50 und des Substrats 20, der sich in der Polarität von dem ersten Pol 57 unterscheidet, kontaktiert.

Gemäß eines Ausführungsbeispiels umfasst der Abstandshalter 45 zwischen der ersten und der zweiten Schicht 55 und 60 eine dritte Schicht 65, wobei die dritte Schicht 65 die erste und die zweite Schicht 55 und 60 elektrisch voneinander isoliert.

Der Abstandshalter 45 kann die thermischen Isolierung der Membran 10 vom Substrat 20 bei gleichzeitiger elektrischer Kontaktierung des elektromagnetischen Strahlungsdetektors realisieren, wobei der Abstandshalter 45 z. B.

als ausreichend langes und dünnbeschichtetes Hohlröhrchen ausgeführt sein kann, das beispielsweise mit Technologien und Prozessen aus der Mikrosystemtechnik hergestellt werden kann. Wie oben beschrieben, ist der thermische Leitwert der herkömmlichen Kontakte bzw. Abstandshalter 15, im Vergleich zu den Stegen 22, aufgrund der dicken Metallbeschichtung bislang sehr groß und trägt daher nicht zur thermischen Isolierung bei. Der Anteil an der thermischen Isolierung beträgt weniger als 2 %. Werden die Wände des z. B. runden Abstandshalters 45 jedoch hinreichend dünn mit einer geeigneten leitenden Schicht, z. B. einer Metallschicht, beschichtet, kann daraus ein entsprechender thermischer Leitwert resultieren, welcher vergleichbar mit dem der Stege bzw. sogar deutlich kleiner sein kann.

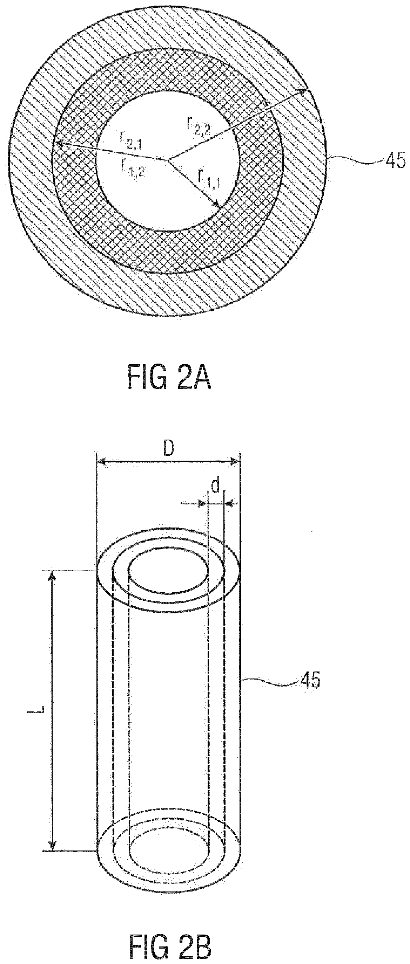

In Fig. 2a sind beispielhaft zwei Schichten mit den Radien $r_{1,1}$, $r_{1,2}$ bzw. $r_{2,1}$ sowie $r_{2,2}$ dargestellt. Das Modell kann jedoch für den Abstandshalter 45 auch auf eine Vielzahl von Schichten erweitert werden und dient der exemplarischen Veranschaulichung einer Berechnung des thermischen Leitwerts eines Zylinders, der aus zwei Schichten besteht.

Der thermische Leitwert $g$ des Abstandshalters 45 lässt sich analog zu Gl.4 berechnen, wobei in diesem Beispiel wie in Fig. 2a gezeigt, Kreisringe die jeweiligen Querschnittsflächen bilden.

$$g = \frac{\pi}{2l} \sum \lambda_i \left( r_{i,2}^2 - r_{i,1}^2 \right) \qquad \text{(Gl.4)}$$

Der Term $r_{i,2} - r_{i,1} = d_i$ ist äquivalent zur Dicke der einzelnen Materialien/Schichten innerhalb der Kontakte, $l$ bezeichnet eine Länge der Abstandshalter und $\lambda_i$ bezeichnet die thermische Leitfähigkeit der Schicht $i$. $i$ ist demnach der Index einer Schicht sowie der Laufindex der Summe und besitzt den Wertebereich $1 \le i \le N$, wobei $N$ die Anzahl der Schichten ist. $N$ kann jede beliebige natürliche Zahl sein. $i$ nimmt beispielsweise von innen nach außen zu, d. h. $i$ entspricht dem Rang der Schicht von innen nach außen. Der zweite Index der Radien beschreibt den Innenradius (1) sowie den Außenradius (2) einer Schicht. Weiterhin gilt $r_{i,2} = r_{i+1,1}$, wenn die Schichten ohne Zwischenraum aufeinander liegen. Ist der Abstandshalter 45 nur aus einer Schicht ausgebildet ($N = 1$), kann die Summe nur aus einem Element gebildet sein und entfällt somit. Analog können die Abstandshalter anstelle der kreisförmigen Ausführung auch jegliche andere Form aufweisen. Ebenso können die Abstandshalter 45 z. B. mit einem thermisch isolierenden Material gefüllt sein, anstatt innen hohl zu sein. Dann wäre z. B. $r_{1,1} = 0$.

Ähnlich zu dem Steg sollte der Abstandshalter 45 ebenfalls möglichst lang sein und aus sehr dünnen Materialien/Schichten bestehen, welche eine geringe thermische Leitfähigkeit aufweisen. Dies geht beispielsweise aus Gl. 4 hervor. Anders ausgedrückt ist es wünschenswert, wenn der Gesamtdurchmesser D der Kontakte bzw. Abstandshalter 45, d. h. $r_{N,2}$ (in Fig. 2 als $r_{2,2}$ bezeichnet), möglichst klein gewählt ist, beispielsweise so, dass eine Querschnittsfläche des Abstandshalters 45 kleiner oder gleich 7 $\mu$m$^2$, in einem weiteren Ausführungsbeispiel kleiner oder gleich 3 $\mu$m$^2$ und in einem bevorzugten Ausführungsbeispiel kleiner oder gleich 0,8 $\mu$m$^2$ beträgt. Andernfalls können viele dünne Schichten oder wenige dicke Schichten einen großen Durchmesser bilden, was beides einen größeren Leitwert zur Folge hat. Demnach ist auch das Aspektverhältnis der Länge l zum Durchmesser D für einen geringen Leitwert zu beachten. Es ist beispielsweise gleich oder größer 10, kann in einem weiteren Ausführungsbeispiel jedoch gleich oder größer 5 oder in einem alternativen Ausführungsbeispiel auch gleich oder größer 1 sein. Diese Gesetzmäßigkeiten gelten auch bei anderen Formen als dem hier beschriebenen runden Abstandshalter, jedoch ist hierfür Gl. 4 entsprechend anzupassen. Der Querschnitt des Abstandshalters könnte beispielsweise auch quadratisch oder rechteckig oder beliebig anders geformt sein. Allgemein könnte dann für eine Schicht $i$ das Paar $r_{i,2}$ und $r_{i,1}$ so gewählt sein, dass $r_{i,2}^2$ der durch die Außenseite des Querschnittes der Schicht $i$ begrenzten Fläche und $r_{i,2}^2 - r_{i,1}^2$ der Fläche des Querschnittes der Schicht $i$ entspricht. $r_{N,2}$ entspräche dann einer "Breite".

Fig. 2b zeigt die weitere Bemaßung des Abstandshalters, wie sie bereits in zur Beschreibung von Fig. 2a verwendet wurde.

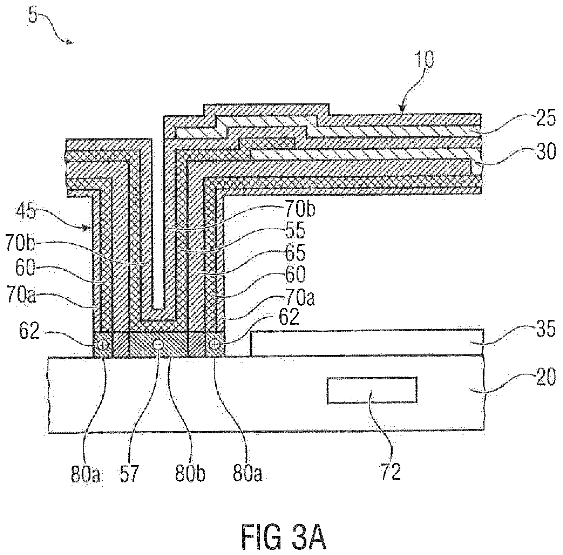

Fig. 3a zeigt ein Anwendungsbeispiel für die Realisierung der thermischen Isolierung und Kontaktierung von elektromagnetischen Strahlungsdetektoren mit Hilfe des Abstandshalters 45. Dabei handelt es sich um einen schematischen Querschnitt von einem Widerstandsmikrobolometer. Auf dem Substrat 20 ist in diesem Ausführungsbeispiel ein Reflektor 35 angeordnet, der die durch die Membran 10 transmittierte Strahlung auf den Strahlungssensor 45 zurückreflektiert.

Der Abstandshalter 45 kann in diesem Ausführungsbeispiel fünf Schichten 55, 60, 65, 70a, 70b umfassen, wobei die Schutzschichten 70a, 70b optional sind. Die Schichten können z. B. wie oben beschrieben mit der Atomlagenbeschichtung ALD in einem Opferschichtverfahren abgeschieden werden. Bei der inneren und äußeren Schicht 70a und 70b kann es sich z. B. um Aluminiumoxid oder ein anderes Oxid handeln. Die innere Schicht 70b hat beispielsweise eine typische Dicke von insgesamt 18-22 nm und die äußere Schicht 70a beispielsweise eine typische Dicke von 8-12 nm. Diese Oxidschichten sollen die innenliegenden, elektrisch leitenden Schichten 55 und 60 beim Ätzen der Opferschicht schützen. Die elektrisch leitenden Schichten 55 und 60, die als Kontakt zwischen Ausleseschaltung und Sensorschicht dienen können, umfassen beispielsweise TiN, Ti, Cu, W, Sn, Ni, Au, Al oder ein anderes elektrisch leitfähiges aber thermisch isolierendes Material und haben beispielsweise eine typische Dicke von 3-7 nm. Jede der Schichten 55, 60, 65, 70a, 70b haben beispielsweise eine Dicke von 1 $\mu$m oder weniger. Der Durchmesser der Abstandshalter kann z. B. 300-500 nm oder weniger betragen. Allgemein, also z. B. auch im Falle nicht runder Abstandshalter, ist die Querschittsfläche in einem ersten Ausführungsbeispiel kleiner als 7 $\mu$m$^2$, in einem zweiten Ausführungsbeispiel kleiner als 3 $\mu$m$^2$ oder in einem dritten Ausführungsbeispiel kleiner als 0,8 $\mu$m$^2$. Dieselbe kann jedoch auch größer sein. Die Länge des Abstandshalters 45 ist beispielsweise abhängig von der Resonatorbedingung, typisch sind beispielsweise etwa 5-7 $\mu$m. Wie oben beschrieben, sollte für eine maximale Absorption der einfallenden infraroten Strahlung die Resonatorbedingung erfüllt werden. Aus diesem Grund kann die Länge der Abstandshalter 45 nicht beliebig gewählt werden, sondern sollte nach GI.1 bzw. GI.2 angepasst werden. Allgemein beträgt die Länge des Abstandshalters 45 zwischen Substrat 20 und Membran 10 mindestens 3 $\mu$m und maximal 100 $\mu$m. Sie kann jedoch auch außerhalb dieses Bereiches liegen.

Neben der thermischen Isolierung besteht die zweite Funktion des Abstandshalters 45 darin, den in der Membran 10 gebildeten Strahlungssensor 50 elektrisch zu kontaktieren. Im Allgemeinen besteht der Abstandshalter 45 aus zwei elektrisch leitenden Schichten 55 und 60, die jeweils einen Pol des Strahlungssensors 50 und des Substrats 20 elektrisch kontaktieren. Zum Schutz der beiden elektrisch leitenden Schichten 55 und 60 beim Ätzprozess der Opferschicht können optional weitere Schutzschichten 70a, 70b ebenfalls mit der Atomlagenbeschichtung abgeschieden werden. Zwischen den elektrisch leitenden Schichten 55 und 60 kann ferner eine elektrische Isolationsschicht 65 aufgebracht sein. Die Schutzschichten 55 und 60 sowie die Isolationsschicht 65 können elektrisch sowie thermisch isolierend und zumindest die Schutzschichten 55, 60 auch stabil gegenüber dem Ätzmedium für die Opferschicht sein. Die Dicken aller Schichten der Abstandshalter liegen beispielsweise in einem Bereich von 0,1 nm-1 $\mu$m.

Die Membran 10 kann sich aus einer Sensor- 30 und einer Absorberschicht 25 zusammensetzen, welche typischerweise etwa 300 nm, z. B. 200-400 nm, a-Si sowie typischerweise etwa 7 nm, beispielsweise 5-9 nm, TiN aufweisen kann. Jedoch sind auch andere Materialien sowie Schichtdicken möglich. Unterhalb der Sensor- 30 und oberhalb der Absorberschicht 25 kann sich jeweils eine typisch 10 nm, z. B 8-12 nm, dicke Aluminiumoxid (Al$_2$O$_3$) Schicht 70 befinden, welche als Schutz beim Ätzen der Opferschicht dienen kann. Wiederum sind auch hier alternativ andere Materialien bzw. ist eine abweichende Schichtdicke möglich.

Wie oben beschrieben kann die Membran 10, welche von dem Abstandshaltern 45 getragen wird, aus einem Element, z. B. der Sensorschicht 30, welches seine elektrischen Eigenschaften bei Zuführung von Wärme verändert und einer Absorberschicht 25 bestehen, wobei die Sensorschicht 30 z. B. etwa 200-400 nm a-Si und die Absorberschicht 25 z. B. etwa 5-9 nm TiN umfassen kann. Unterhalb der Sensor- 30 und oberhalb der Absorberschicht 25 kann sich jeweils eine z. B 8-12 nm dicke Aluminiumoxid (Al$_2$O$_3$) Schicht 70 befinden, welche als Schutz beim Ätzen der Opferschicht dienen kann. Jedoch sind auch andere Materialien sowie Schichtdicken möglich. Die temperaturempfindliche Sensorschicht 30 kann als ein temperaturabhängiger, elektrischer Widerstand, eine temperaturabhängige Kapazität, eine temperaturabhängige Induktivität oder eine Diode (pn-Übergang) realisiert sein. Die Absorberschicht 25 kann so gewählt werden, dass dessen Reflexionskoeffizient ähnlich dem von Luft ist, damit ein möglichst kleiner Teil der einfallenden Strahlung reflektiert wird.

Das Substrat 20 kann beispielsweise aus einem Halbleitermaterial hergestellt sein. Neben den Elektroden, die der Abstandshalter 45 kontaktiert, kann im Substrat 20 auch eine Temperaturauswerteschaltung 72 integriert sein. Dieselbe ist beispielsweise direkt unterhalb der Membran 10 angeordnet, kann jedoch auch an einer anderen Stelle platziert sein.

Eine Kontaktierung der Membran 10 kann beispielsweise an der Sensorschicht 30 durch die erste und die zweite elektrisch leitende Schicht 55 und 60 ausgeführt sein. Um beispielsweise einen lateralen Stromfluss zu ermöglichen, kann z. B. die erste elektrisch leitende Schicht 55 die Sensorschicht 30 in einem ersten Randbereich kontaktieren, sowie ferner die zweite elektrisch leitende Schicht 60 die Sensorschicht 30 an einem dem ersten Randbereich gegenüberliegenden zweiten Randbereich kontaktieren. Die elektrisch isolierende Schicht 65 kann ferner die elektrisch leitenden Schichten 55 und 60 sowie auch die Sensorschicht 30 und die zweite elektrisch leitende Schicht 60 voneinander isolieren.

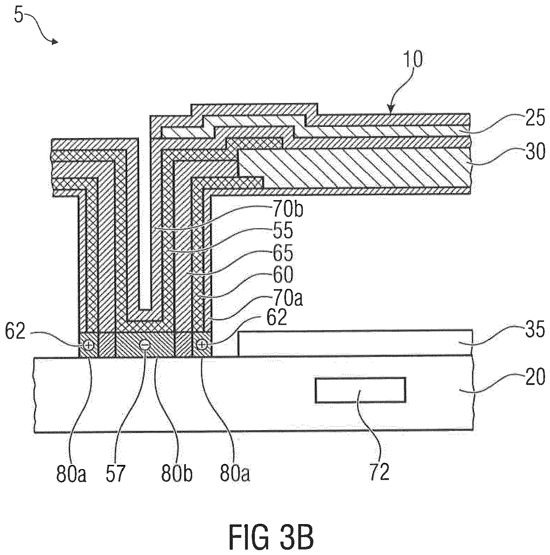

Fig. 3b unterscheidet sich von Fig. 3a in der Kontaktierung der Membran 10. Die Membran 10 kann hier von der ersten elektrischen Schicht 55 und der zweiten elektrischen Schicht 60 an einem gleichen Randbereich wie die Sensorschicht 30 kontaktiert werden. Diese Anordnung der Kontaktierung kann beispielsweise einen Stromfluss in Dickenrichtung durch die Sensorschicht 30 ermöglichen.

Weiterhin zeigen Fig. 3a und Fig. 3b die Kontaktierung des Abstandshalters 45 mit dem Substrat 20. Die Kontaktierung kann über eine Elektrode bzw. einen Kontakt 80a, 80b erfolgen, der zur Ausbildung zweier gegensätzlich polarisierter Pole 57 und 62 zweigeteilt sein kann. In Fig. 3a bzw. Fig. 3b ist der Querschnitt einer Kreisscheibe 80b, die einen ersten Pol 57, z. B. einen Minuspol ausbildet, dargestellt. Der zweite Pol 62, z. B. ein Pluspol, kann elektrisch von dem Pol 57 isoliert als ein Kreisring 80a ausgeführt sein. Die Elektroden 80a und 80b können beispielsweise Aluminium, Wolfram oder ein anderes elektrisch leitfähiges Material aufweisen. Die Isolierung zwischen den Elektroden 80a und 80b kann z. B. durch ein isolierendes Material, beispielsweise ein Oxid, aufweisen. Weiterhin ist es auch möglich, die gezeigte Polarität der Pole 57 und 62 zu vertauschen.

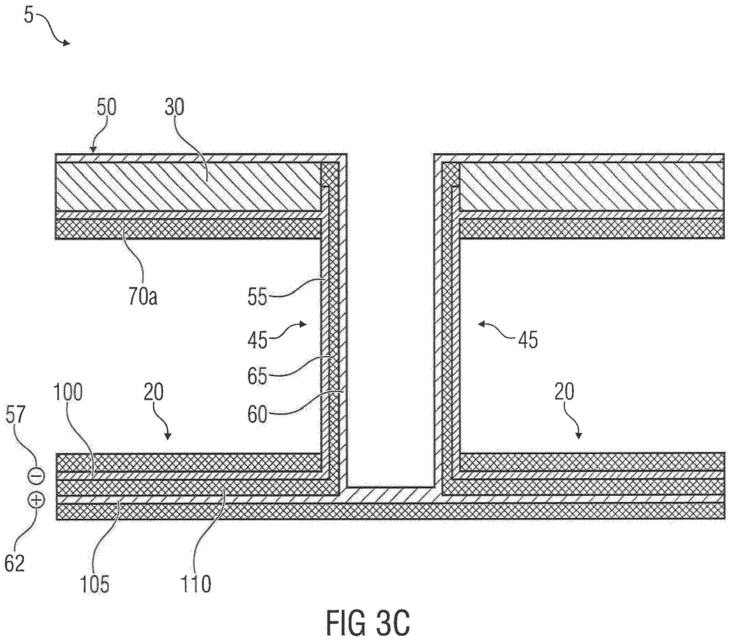

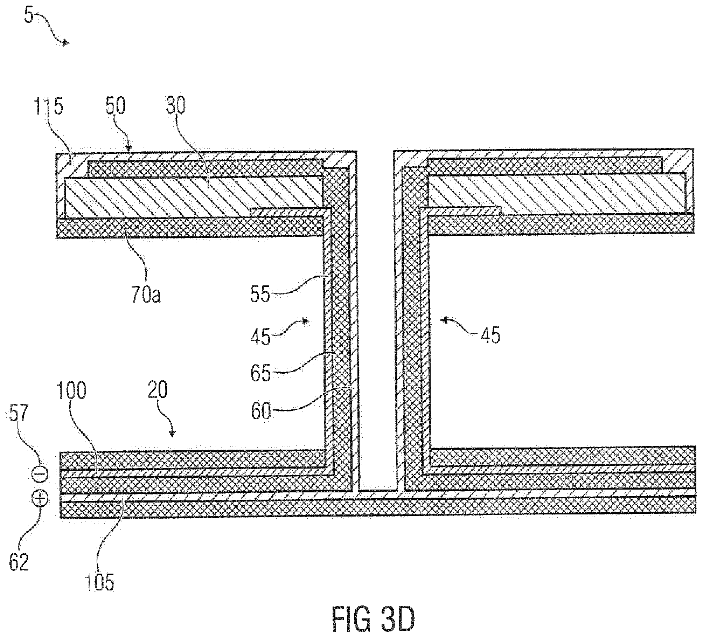

Fig. 3c und 3d zeigen eine vereinfachte schematische Darstellung des Abstandshalters 45 gemäß einem Ausführungsbeispiel, wobei der Abstandshalter in zwei getrennten Metallisierungsebenen 100, 105 kontaktiert wird. Die erste Schicht 55, die elektrisch leitend ist, kontaktiert beispielsweise den ersten Pol 57 in der ersten Metallisierungsebene 100 des Substrats elektrisch. Die zweite Schicht 60 kontaktiert z. B. den zweiten Pol 62 in der zweiten Metallisierungsebene 105 elektrisch. Die Polarität der Pole 57 und 62 kann auch von der in Fig. 3c und 3d gezeigten Polarität abweichen. Die Metallisierungsebenen 100 und 105 können, getrennt durch eine Isolationsschicht 110, auf das Substrat 20 aufgebracht bzw. in dasselbe, beispielsweise mittels Dotierung, eingebracht werden. Die Dotierung bzw. die Dotierstoffe oder Dotieratome können z. B. in unterschiedliche Tiefen des Substrats eingebracht werden. Alternativ werden die Metallisierungsebenen beispielweise mittels PVD oder einem anderen geeigneten Prozess auf dem Substrat abgeschieden. Ebenso ist es denkbar, eine Metallisierungsebene durch Dotierung und die zweite Metallisierungsebene durch aufbringen einer elektrisch leitenden Schicht auf das Substrat zu erzeugen. Die Isolationsschicht 110 kann das gleiche Material aufweisen, wie die Schicht 65, die die erste und die zweite Schicht 55, 60 voneinander isoliert. Ferner kann dieselbe auch ein abweichendes, elektrisch isolierendes Material aufweisen.

Der Abstandshalter 45 kontaktiert den Strahlungssensor 50, insbesondere die Sensorschicht 30 elektrisch. Fig. 3c zeigt eine Kontaktierung vertikalen Stromfluss ermöglicht. Fig. 3d zeigt eine Kontaktierung, die einen lateralen Stromfluss ermöglicht. Entsprechende Schutzschichten, die in Fig. 3a und 3b gezeigt sind können ferner auch auf die Ausführungsbeispiele in Fig. 3c und 3d angewendet werden. Beispielhaft ist hier die Schutzschicht 70a am Sensor gezeigt, die z. B. ein Oxid aufweisen kann. Ferner kann die zweite elektrisch leitende Schicht 60 die Sensorschicht 30 an der Kontaktstelle 115 lateral (bzw. "vor Kopf") und/oder in Dickenrichtung, beispielsweise an einem Hauptoberflächenbereich der Sensorschicht 30, die dem Substrat abgewandt ist, kontaktieren. Eine Mischform der beiden genannten Kontaktierungsarten ist in Fig. 3d gezeigt.

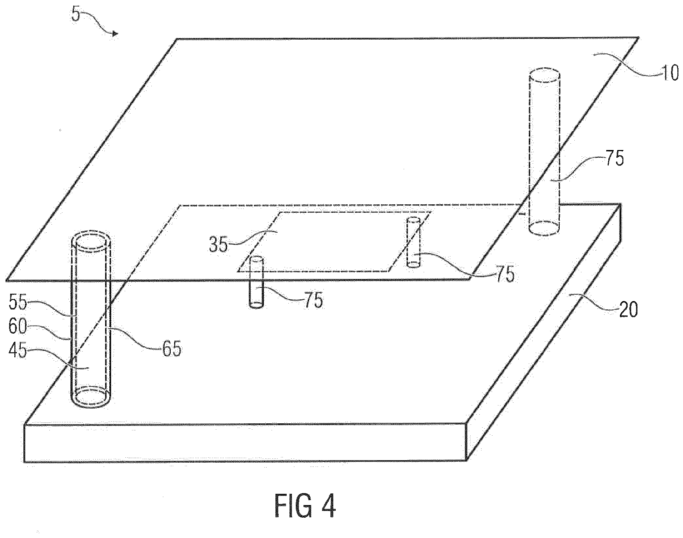

Fig. 4 zeigt ein weiteres Ausführungsbeispiel eines Strahlungsdetektors 5 in einer schematischen Seitenansicht. In diesem Ausführungsbeispiel entfällt die Einschränkung der Wahl der Länge des Abstandshalters 45 auf Grund der Resonatorbedingung, da der Reflektor 35 prozesstechnisch derart realisiert werden kann, dass der optische Weg zwischen demselben und der Absorberschicht 25, unabhängig von der Länge des Abstandshalters 45, genau ein Viertel oder ein ganzzahliges Vielfaches von ein Viertel einer zu detektierenden Hauptwellenlänge ist. Dies kann ermöglicht werden, indem der Reflektor 35 mit Hilfe von weiteren Abstandshaltern 75 aufgehängt und somit hochgestellt wird. Die Abstandshalter 75 können dann so gewählt werden, dass die Resonatorbedingung erfüllt werden kann.

Ferner kann auch die Membran 10 über einen weiteren Abstandshalter 75 gestützt bzw. stabilisiert werden. Der Abstandshalter 75 kann beispielsweise aus einem isolierenden Material, z. B. einem Oxid bestehen. Somit kann der weitere Abstandshalter 75 bei der Betrachtung der Isolation zwischen der Membran 10 und dem Substrat 20 vernachlässigt werden. Weiterhin ist auch der Einsatz von weiteren Abstandshaltern möglich, die die Membran 10 stabilisieren bzw. abstützen.

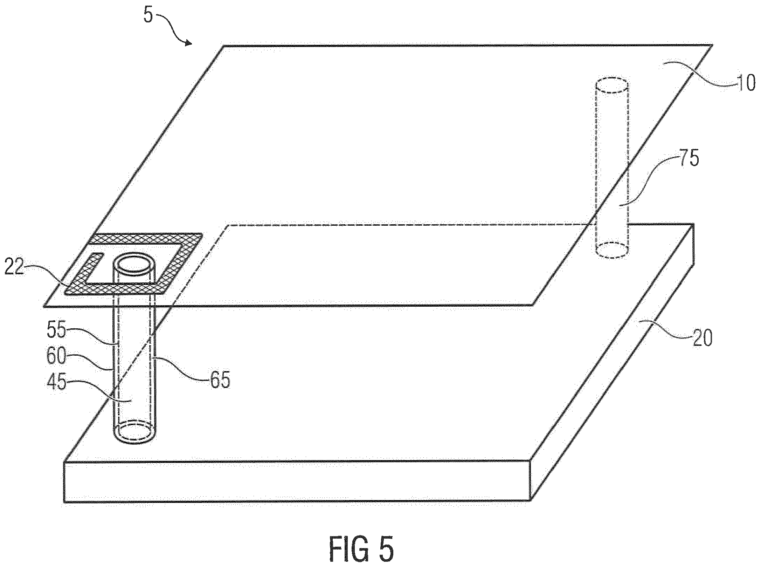

Fig. 5 zeigt eine schematische Seitenansicht eines Strahlungsdetektors 5 mit einem Steg 22. Gemäß des gezeigten Ausführungsbeispiels kann, ergänzend zur bereits beschriebenen thermischen Isolation der Membran 10 vom Substrat 20 durch den Abstandshalter 45, die Membran über einen Steg 22 an dem Abstandshalter 45 aufgehängt sein. Der Vorteil kann in einer weiteren Verbesserung der thermischen Isolierung liegen. Es ergeben sich somit zahlreiche Kombinationsmöglichkeiten zwischen Abstandshalter- und Stegdesign, wodurch der Sensor flexibel hergestellt werden kann. Der Pixelpitch kann beispielsweise 17 $\mu$m betragen. Die thermische Isolierung kann in diesem Fall durch den Abstandshalter 45 sowie einem konventionellen Steg 22 realisiert werden. Der Steg 22 kann in einer Ebene mit der Membran 10 liegen und aus einer oder mehreren Schichten, die die Membran 10 bilden, gebildet sein. Von der Membran 10 kann der Stege 22 durch einen Schlitz 85 getrennt sein, mit Ausnahme einer Stelle, an dem die Membran 10 am Steg 22 aufgehängt ist. Der Steg 22 kontaktiert den Abstandshalter 45 an einem Ende und die Membran 10 bzw. den Strahlungssensor 50 an einem anderen Ende. Im Vergleich zu den Stegen an herkömmlichen Abstandshaltern kann, durch die Isolierung des Abstandshalters 45, der Steg 22 kürzer und/oder schmaler ausgeführt sein. Die thermische Isolation erfolgt überwiegend über den Abstandshalter 45, d. h. der thermische Leitwert des Stegs 22 ist beispielsweise größer als der thermisch Leitwert des Abstandshalters 45, den der Steg 22 mit der Membran verbindet. Es kann jedoch auch vorkommen, dass der Abstandshalter 45 einen größeren thermischen Leitwert aufweist. Wie bereits beschrieben können auch in diesem Ausführungsbeispiel ein weiterer oder mehrere weitere Abstandshalter 75 zur Stabilisierung der Membran 10 vorgesehen werden.

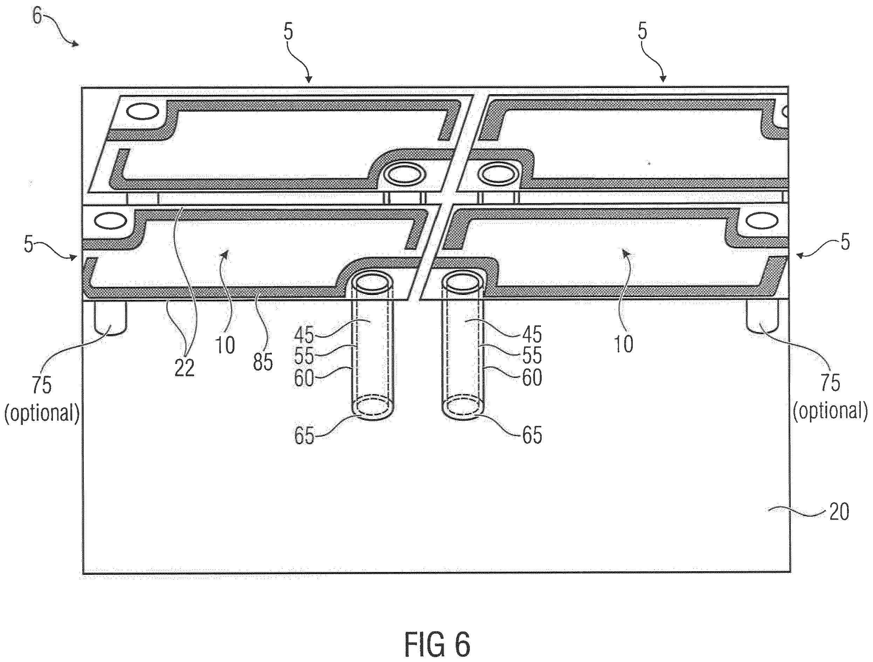

Fig. 6 zeigt ein Array von Strahlungssensoren 6, umfassend vier Strahlungssensoren 5, auf dem Substrat 20. Das Array von Strahlungssensoren 6, kann z. B. einen Bildsensor für thermische Strahlung bilden. Die Membran 10 ist beispielsweise über den Steg 22 an dem Abstandshalter 45 aufgehängt. Der Abstandshalter 45 kontaktieren das Substrat 20 und die Membran elektrisch und isolieren beide thermisch voneinander. Die weiteren Abstandshalter 75 sind wiederum optional und können der Stabilisierung des einzelnen Strahlungssensors 5 dienen, beispielsweise um eine planare Fläche des Arrays von Strahlungssensoren 6 zu erhalten.

Das Array von Strahlungssensoren 6 kann z. B. die Intensität mehrerer Strahlungsquellen detektieren um beispielsweise ein zweidimensionales Bild zu erstellen. Hierfür können mehrere Membranen über eine Vielzahl von Abstandshaltern mit einem oder mehreren Substraten kontaktiert und thermisch isoliert werden. Jeder Strahlungsdetektor 5 kann in dieser Anordnung ein Pixel des zweidimensionalen Bildes repräsentieren. Temperaturauswerteschaltungen, die z. B. im Substrat angeordnet sein können und sich beispielsweise unterhalb oder neben der Membran befinden, können z. B. elektrisch miteinander verbunden sein, beispielsweise um ein serielles Auslesen zu ermöglichen, oder elektrisch voneinander isoliert sein, beispielsweise um die Informationen der Temperaturausweteschaltungen parallel auslesen zu können.

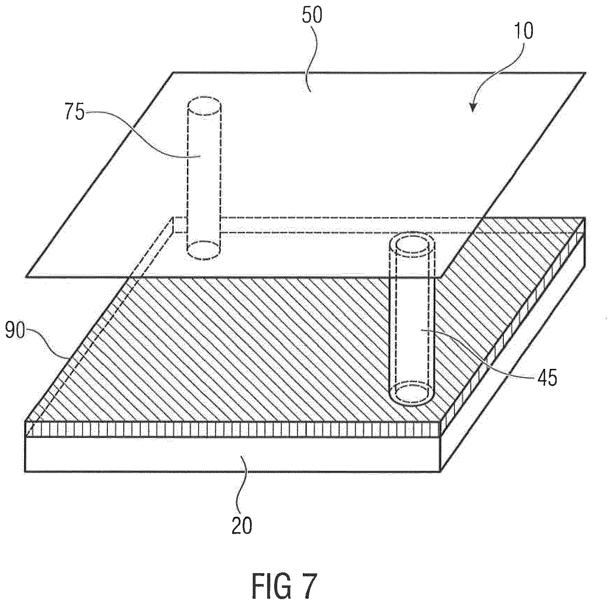

Fig. 7 zeigt ein weiteres Ausführungsbeispiel ähnlich dem Ausführungsbeispiel von Fig. 4. Zur Stabilisierung des Abstandshalter 45, sowie optional weiterer Abstandshalter 75 zur Stabilisierung der Membran 10 und/oder zum Aufhängen des Reflektors 35, kann vor dem Aufbringen der Opferschicht eine Oxidschicht 90 auf das Substrat aufgebracht werden, die beim abschließenden Ätzen sehr selektiv zum Opfermaterial ist. Wird die Opferschicht entfernt, bleibt die Oxidschicht 90 erhalten und stabilisiert die Abstandshalter zusätzlich.

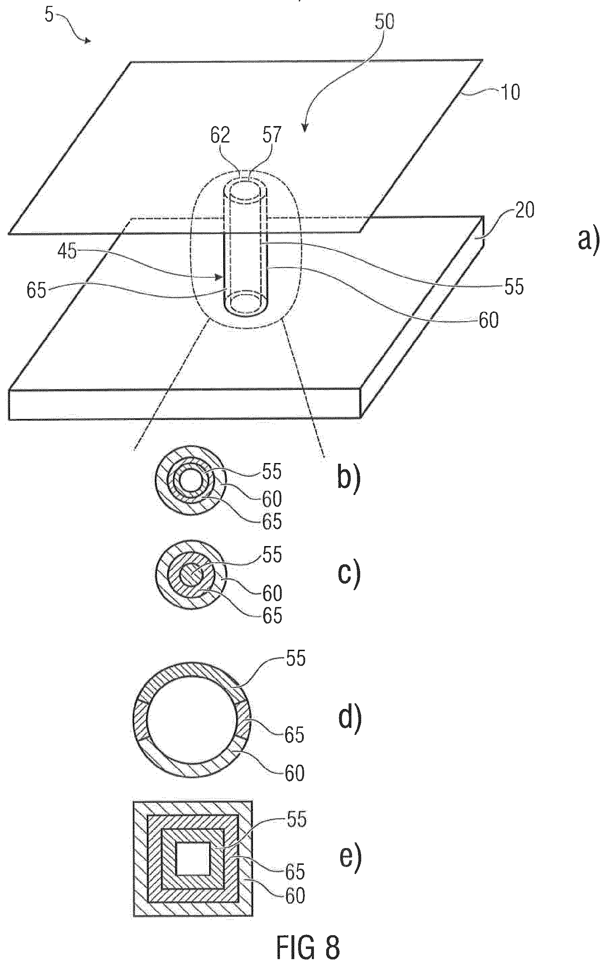

Fig. 8a zeigt einen Strahlungsdetektor 5, wie er auch in Fig. 1 dargestellt ist. Im Folgenden wird anhand der Fig. 8b-e der Abstandshalter 45 bzw. die Form des Abstandshalters 45 näher beschrieben.

Fig. 8b zeigt eine schematische Darstellung eines lateralen Schnittes durch den runden Abstandshalter 45, der innen hohl ist. Die elektrisch leitende Schicht 55 sowie die elektrisch leitende Schicht 60 können zwei Pole des Substrats 20 mit zwei Polen der Membran 10 verbinden. Die Schicht 65 kann die beiden elektrisch leitfähigen Schichten 55 und 60 voneinander isolieren sowie ferner auch die Membran 10 von dem Substrat 20 thermisch isolieren. Werden die elektrisch leitfähigen Schichten 50 und 60 ausreichend dünn abgeschieden, kann durch diese Anordnung ein sehr geringer thermischer Leitwert erzielt werden.

Fig. 8c zeigt eine schematische Darstellung eines lateralen Schnittes durch einen runden Abstandshalter, der innen nicht hohl ist. Die Anordnung in Fig. 8c ist vergleichbar mit der Anordnung in Fig. 8b, jedoch wird der Prozess der Abscheidung der Schicht 55 bzw. der Beschichtung nicht gestoppt, sobald eine Schicht 55 auf der Schicht 65 abgeschieden ist, sondern fortgeführt, bis die Schicht 55 innen keinen Hohlraum mehr aufweist. Diese Anordnung kann eine erhöhte Festigkeit des Abstandshalters 45 ermöglichen.

Fig. 8d zeigt eine schematische Darstellung eines lateralen Schnittes durch einen runden Abstandshalter, der innen hohl ist, wobei zwei Kontakte in einem Kreisring geführt werden. Die Schicht 55 sowie die Schicht 60 nehmen jeweils einen Ausschnitt eines Kreisringes ein, wobei zwischen den Teilkreisen die elektrisch isolierende Schicht 65 die beiden Teilringe 55 und 60 voneinander elektrisch isoliert.

Fig. 8e zeigt eine schematische Darstellung eines lateralen Schnittes durch einen eckigen Abstandshalter, der innen hohl ist. Das Ausführungsbeispiel ähnelt dem Ausführungsbeispiel von Fig. 8b, wobei die Schichten 55, 60, 65 eckig und nicht rund ausgeführt sind. Ferner soll diese Darstellung zeigen, dass neben dem gezeigten runden Abstandshalter 45 auch weitere, beliebige Formen des Abstandshalters 45 möglich sind. Weiterhin können außen und/oder wenn möglich innen eine oder mehrere Schutzschichten aufgebracht sein.

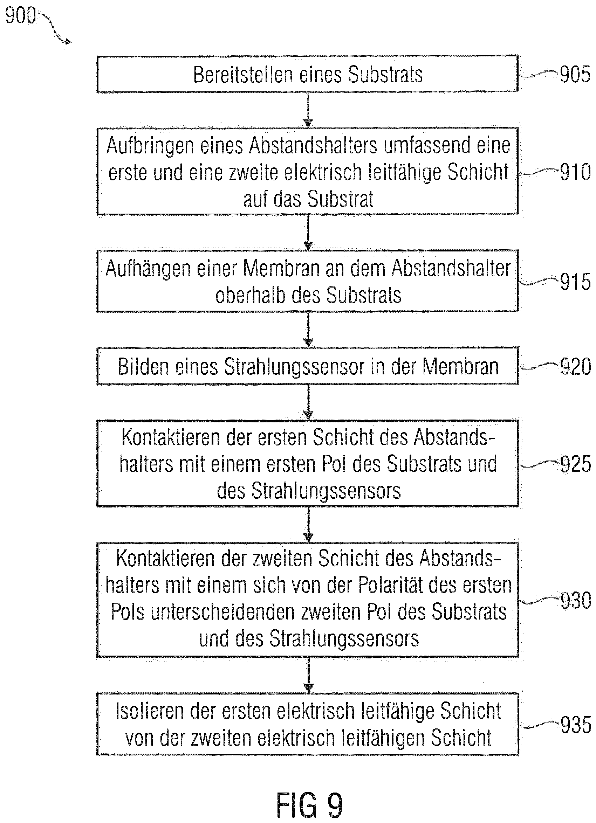

Fig. 9 zeigt ein schematisches Blockdiagramm eines Verfahrens 900 zur Herstellung eines Strahlungsdetektors 5 mit einem Schritt 905 "Bereitstellen des Substrats 20", einem Schritt 910 "Aufbringen eines Abstandshalters 45 umfassend eine erste und eine zweite elektrisch leitfähige Schicht 55, 60 auf das Substrat", einen Schritt 915 "Aufhängen der Membran 10 an dem Abstandshalter 45 oberhalb des Substrats 20", einen Schritt 920 "Bilden eines Strahlungssensor 50 in der Membran 10", einen Schritt 925 "Kontaktieren der ersten Schicht 55 des Abstandshalters 45 mit einem ersten Pol 57 des Substrats und des Strahlungssensors 50", einen Schritt 930 "Kontaktieren der zweiten Schicht 60 des Abstandshalters 45 mit einem sich von der Polarität des ersten Pols 57 unterscheidenden zweiten Pol 62 des Substrats 20 und des Strahlungssensors 50" und einen Schritt 935 "Isolieren der ersten elektrisch leitfähigen Schicht 55 von der zweiten elektrisch leitfähigen Schicht 60"

Mit anderen Worten kann der Abstandhalter 45 mit Hilfe eines Opferschichtprozesses hergestellt werden. Dabei kann zunächst ein Loch in die Opferschicht geätzt und im Anschluss beschichtet werden. Für das Ätzen des Loches kann z. B. der sogenannte Boschprozess verwendet werden, da es hiermit möglich ist steile Kantenwinkel bei großen Aspektverhältnissen zu erzeugen. Die Schichten können mittels Atomlagenbeschichtung ALD abgeschieden werden, sodass selbst bei den erwähnten steilen Kantenwinkeln die geätzten Löcher bedeckt sein können, d. h. dass die gesamte Fläche des in die Opferschicht geätzten Loches gleichmäßig dünn beschichtet werden kann. Die Toleranz kann dabei weniger als 50 nm betragen. Alternativ kann die Toleranz auch kleiner als 25 nm oder kleiner als 5 nm sein. Im Weiteren können die abgeschiedenen Schichten je nach Herstellungsprozess strukturiert werden. Zuletzt folgt dann die Entfernung der Opferschicht, sodass der gefertigte Abstandshalter frei steht. Entgegen häufig gezeigten Anordnung des Abstandshalters 45 in einer Ecke der Membran 10, kann dieser auch an anderen Stellen, z. B. mittig zwischen den Ecken angeordnet sein. Weiterhin ist es auch möglich, weitere Abstandshalter 75 beispielsweise aus einem thermisch isolierenden Material, z. B. einem Oxid wie z. B. Aluminiumoxid als zusätzliche Stütze zur mechanischen Stabilisierung zu realisieren, ohne dass diese eine elektrische Funktionalität aufweisen.

Aufgrund der hier beschriebenen Erfindung ist es möglich den relativen Flächenanteil des Absorbers bei gegebenem Pixelpitch zu maximieren, da laterale Stege, welche bislang Hauptbestandteil der thermischen Isolierung waren, komplett entfallen bzw. deutlich reduziert werden können. Diese Platzeinsparung kann genutzt werden, um z. B. die effektive Absorberfläche zu vergrößern. Die thermische Isolierung kann nach GI. 4 über die einzelnen Schichtdicken, den Grundradius und die Länge des Abstandshalters 45 flexibel eingestellt werden. Das jeweilige Maximum ist begrenzt durch die Stabilität der Abstandshalter 45 und die Resonatorbedingung. Somit ist es sogar möglich, einen dementsprechend deutlich kleineren thermischen Leitwert, als es bisher mit den Stegen möglich war, zu erzielen. Aufgrund dieser beiden Faktoren kann die Performance von Strahlungsdetektoren wie z. B. aktuellen Mikrobolometern signifikant gesteigert werden. Die Vorteile von einer sehr großen Absorberfläche bzw. Sensorfläche bei einer gleichzeitigen guten thermischen Isolierung können auch besonders bei der Skalierung des Pixelpitches zu kleineren Werten einen erheblichen Nutzen bringen. Aufgrund der kleinen Abmessungen können die Abstandshalter auch als Nanotubes (dt.: Nanoröhren) bezeichnet werden. Diese ermöglichen eine Vergrößerung der zur Verfügung stehenden Absorberfläche bei gleichem thermischen Leitwert durch eine Reduzierung der Stegfläche, wobei der thermische Leitwert gleichzeitig unabhängig einstellbar ist.

Gemäß einem ersten Aspekt kann ein Strahlungsdetektor 5 ein Substrat 20 und eine Membran 10 aufweisen, die über einen Abstandshalter 45 oberhalb des Substrats 20 aufgehängt ist, wobei der Abstandshalter 45 einen in der Membran 10 gebildeten Strahlungssensor 50 gegenüber dem Substrat 20 thermisch isoliert; wobei der Abstandshalter 45 eine erste Schicht 55 umfasst, die elektrisch leitend ist und einen ersten Pol 57 des Strahlungssensors 50 und des Substrats 20 kontaktiert; wobei der Abstandshalter 45 eine zweite Schicht 60 umfasst, die elektrisch leitend und von der ersten elektrisch leitfähigen Schicht 55 elektrisch isoliert ist und einen zweiten Pol 62 des Strahlungssensors 50 und des Substrats 20 kontaktiert, wobei sich der zweite Pol 62 in der Polarität vom ersten Pol 57 unterscheidet.

Gemäß einem zweiten Aspekt unter Rückbezug auf den ersten Aspekt kann außerdem in dem Strahlungsdetektor 5 zwischen dem Substrat 20 und der Membran 10 ein Reflektor 35 angeordnet sein.

Gemäß einem dritten Aspekt unter Rückbezug auf den zweiten Aspekt kann der Reflektor 35 aus einer Metallschicht bestehen.

Gemäß einem vierten Aspekt unter Rückbezug auf zumindest einen des ersten bis dritten Aspekts kann die erste und/oder die zweite Schicht 55, 60 TiN, Ti, Cu, W, Sn, Ni, Au, Al oder eine Kombination aus diesen aufweisen.

Gemäß einem fünften Aspekt unter Rückbezug auf zumindest einen des ersten bis vierten Aspekts kann die dritte Schicht 65 ein Oxid aufweisen.

Gemäß einem sechsten Aspekt unter Rückbezug auf zumindest einen des ersten bis fünften Aspekts kann eine Länge des Abstandshalters 45 zwischen Membran 10 und Substrat 20 kleiner oder gleich $100\,\mu m$ sein.

Gemäß einem siebten Aspekt unter Rückbezug auf zumindest einen des ersten bis sechsten Aspekts kann in dem Strahlungsdetektor das Verhältnis einer Länge zu einer Breite des Abstandshalters 45 größer oder gleich 10 oder größer oder gleich 5 oder größer oder gleich 1 sein.

Gemäß einem achten Aspekt unter Rückbezug auf den siebten Aspekt kann die Schichtdicke über eine gesamte Länge der Abstandshalter 45 zwischen Substrat 20 und Membran 10 um weniger als 50 nm oder weniger als 25 nm oder weniger als 5 nm variieren.

Gemäß einem neunten Aspekt unter Rückbezug auf zumindest einen des ersten bis achten Aspekts kann der Strahlungssensor 50 ein temperaturabhängiger elektrischer Widerstand oder eine temperaturabhängige Kapazität oder eine temperaturabhängige Induktivität oder eine Diode sein.

Gemäß einem zehnten Aspekt unter Rückbezug auf zumindest einen des ersten bis neunten Aspekts kann das Substrat 20 eine Temperaturauswertungsschaltung 72 beinhalten.

Gemäß einem elften Aspekt unter Rückbezug auf zumindest einen des ersten bis zehnten Aspekts kann der Strahlungsdetektor 5 ein Bolometer sein.

Ein zwölfter Aspekt kann ein Array von Strahlungsdetektoren 6 gemäß einem der obigen Aspekte sein.

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

**Patentansprüche**

1. Strahlungsdetektor (5) mit einem Substrat (20) und einer Membran (10), die über einen als freistehendes Hohlröhrchen ausgestalteten Abstandshalter (45) oberhalb des Substrats (20) aufgehängt ist,

   wobei der Abstandshalter (45) einen in der Membran (10) gebildeten Strahlungssensor (50) gegenüber dem Substrat (20) thermisch isoliert;
   wobei der Abstandshalter (45) eine erste Schicht (55) umfasst, die elektrisch leitend ist und einen ersten Pol (57) des Strahlungssensors (50) und des Substrats (20) kontaktiert;
   wobei der Abstandshalter (45) eine zweite Schicht (60) umfasst, die elektrisch leitend und von der ersten elektrisch leitfähigen Schicht (55) elektrisch isoliert ist und einen zweiten Pol (62) des Strahlungssensors (50) und des Substrats (20) kontaktiert, wobei sich der zweite Pol (62) in der Polarität vom ersten Pol (57) unterscheidet.

2. Strahlungsdetektor (5) gemäß Anspruch 1, wobei der Abstandshalter (45) ausgebildet ist, die Membran (10) gegenüber dem Substrat (20) überwiegend thermisch zu isolieren.

3. Strahlungsdetektor (5) gemäß einem der vorherigen Ansprüche, wobei die erste Schicht (55), die elektrisch leitend ist, den ersten Pol (57) in einer ersten Metallisierungsebene (100) des Substrats elektrisch kontaktiert und wobei die zweite Schicht (60), den zweiten Pol (62) in einer zweiten Metallisierungsebene (105) elektrisch kontaktiert.

4. Strahlungsdetektor (5) gemäß einem der vorherigen Ansprüche, wobei der Abstandshalter eine dritte Schicht (65) umfasst, die zwischen der ersten und der zweiten Schicht (55, 60) angeordnet ist, wobei die dritte Schicht (65) die erste Schicht (55) von der zweiten Schicht (60) elektrisch isoliert.

5. Strahlungsdetektor (5) gemäß einem der vorherigen Ansprüche, wobei die Membran (10) steglos an dem Abstandshalter (45) aufgehängt ist.

6. Strahlungsdetektor (5) gemäß einem der Ansprüche 1 bis 4, wobei die Membran (10) an dem Abstandshalter (45) über einen Steg (22) aufgehängt ist, wobei die thermische Isolation der Membran (10) von dem Substrat (20) überwiegend durch den Abstandshalter (45) erfolgt.

7. Strahlungsdetektor (5) gemäß einem der vorigen Ansprüche, wobei zwischen dem Substrat (20) und der Membran (10) ein Reflektor (35) angeordnet ist.

8. Strahlungsdetektor (5) gemäß Anspruch 7, wobei der Abstand zwischen dem Reflektor (35) und der Membran (10) ein ungerades, ganzzahliges Vielfaches von ein Viertel einer zu detektierenden Hauptwellenlänge beträgt.

9. Strahlungsdetektor (5) gemäß einem der vorigen Ansprüche, wobei der Abstandshalter (45) mittels ALD im Opferschichtverfahren hergestellt ist.

10. Strahlungsdetektor (5) gemäß einem der vorigen Ansprüche, wobei eine Querschnittsfläche des Abstandshalters (45) über eine gesamte Länge kleiner oder gleich 7 $\mu$m$^2$ oder kleiner oder gleich 3 $\mu$m$^2$ oder kleiner oder gleich 0,8 $\mu$m$^2$ ist.

11. Strahlungsdetektor (5) gemäß einem der vorigen Ansprüche, wobei eine Länge der Abstandshalter (45) zwischen Membran (10) und Substrat (20) größer oder gleich 0,4 $\mu$m ist.

12. Strahlungsdetektor (5) gemäß einem der vorigen Ansprüche, wobei die maximale Schichtdicke der ersten, zweiten oder dritten Schicht (55, 60, 65) kleiner oder gleich 1 $\mu$m ist.

13. Strahlungsdetektor (5) gemäß einem der vorigen Ansprüche, wobei das Verhältnis einer Länge zu einer Breite des Abstandshalters (45) größer oder gleich 10 oder größer oder gleich 5 oder größer oder gleich 1 ist.

14. Strahlungsdetektor (5) gemäß einem der Ansprüche 1 bis 4 oder 6-13, wobei der Strahlungsdetektor (5) ferner einen lateral verlaufenden Steg (22) aufweist, über den die Membran (10) an dem Abstandshalter (45) aufgehängt ist und der eine Isolation der Membran (10) gegenüber dem Substrat (20) durch den Abstandshalter (45) erhöht und mit dem Strahlungssensor (50) elektrisch kontaktiert ist.

15. Strahlungsdetektor (5) nach einem der vorhergehenden Ansprüche, wobei der Abstandshalter (45) in einer Ecke der Membran (10) angeordnet ist.

16. Verfahren zur Herstellung eines Strahlungsdetektors (5) mit den folgenden Schritten:

Bereitstellen eines Substrats (20);
Aufbringen eines als freistehendes Hohlröhrchen ausgestalteten Abstandshalters (45) umfassend eine erste und eine zweite elektrisch leitfähige Schicht (55, 60) auf das Substrat (20);
Aufhängen einer Membran (10) an dem Abstandshalter (45) oberhalb des Substrats (20);
Bilden eines Strahlungssensor (50) in der Membran (10);
Kontaktieren der ersten Schicht (55) des Abstandshalters (45) mit einem ersten Pol (57) des Substrats (20) und des Strahlungssensors (50);
Kontaktieren der zweiten Schicht (60) des Abstandshalters (45) mit einem sich von der Polarität des ersten Pols (57) unterscheidenden zweiten Pol (62) des Substrats (20) und des Strahlungssensors (50);
Isolieren der ersten elektrisch leitfähigen Schicht (55) von der zweiten elektrisch leitfähigen Schicht (60).

## Claims

1. Radiation detector (5) having a substrate (20) and a membrane (10) that is suspended above the substrate (20) via a spacer (45) configured as a self-supporting hollow tube,

wherein the spacer (45) thermally insulates a radiation sensor (50) formed in the membrane (10) with respect to the substrate (20);
wherein the spacer (45) includes a first layer (55) that is electrically conductive and contacts a first pole (57) of the radiation sensor (50) and the substrate (20);
wherein the spacer (45) includes a second layer (60) that is electrically conductive and is electrically insulated from the first electrically conductive layer (55) and contacts a second pole (62) of the radiation sensor (50) and the substrate (20), wherein the second pole (62) differs in polarity from the first pole (57).

2. Radiation detector (5) according to claim 1, wherein the spacer (45) is configured to insulate the membrane (10) with respect to the substrate (20) in a predominantly thermal manner.

3. Radiation detector (5) according to any one of the preceding claims, wherein the first layer (55), which is electrically conductive, electrically contacts the first pole (57) in a first metallization plane (100) of the substrate, and wherein the second layer (60) electrically contacts the second pole (62) in a second metallization plane (105).

4. Radiation detector (5) according to any one of the preceding claims, wherein the spacer includes a third layer (65) arranged between the first and the second layer (55, 60), wherein the third layer (65) electrically insulates the first layer (55) from the second layer (60).

5. Radiation detector (5) according to any one of the preceding claims, wherein the membrane (10) is suspended from the spacer (45) without ridges.

6. Radiation detector (5) according to any one of claims 1 to 4, wherein the membrane (10) is suspended from the spacer (45) via a ridge (22), wherein the thermal insulation of the membrane (10) from the substrate (20) is predominantly carried out by the spacer (45).

7. Radiation detector (5) according to any one of the preceding claims, wherein a reflector (35) is arranged between the substrate (20) and the membrane (10).

8. Radiation detector (5) according to claim 7, wherein the distance between the reflector (35) and the membrane (10) is an odd integer multiple of a quarter of a main wavelength to be detected.

9. Radiation detector (5) according to any one of the preceding claims, wherein the spacer (45) is manufactured by means of ALD in the sacrificial-layer method.

10. Radiation detector (5) according to any one of the preceding claims, wherein a cross-sectional area of the spacer (45) over an entire length is smaller than or equal to 7 $\mu m^2$ or smaller than or equal to 3 $\mu m^2$ or smaller than or equal to 0.8 $\mu m^2$.

11. Radiation detector (5) according to any one of the preceding claims, wherein a length of the spacers (45) between the membrane (10) and the substrate (20) is larger than or equal to 0.4 $\mu m$.

12. Radiation detector (5) according to any one of the preceding claims, wherein the maximum layer thickness of the first, second or third layers (55, 60, 65) is smaller than or equal to 1 $\mu m$.

13. Radiation detector (5) according to any one of the preceding claims, wherein the ratio of length to width of the spacer (45) is larger than or equal to 10 or larger than or equal to 5 or larger than or equal to 1.

14. Radiation detector (5) according to any one of claims 1 to 4 or 6-13, wherein the radiation detector (5) further comprises a laterally extending ridge (22) via which the membrane (10) is suspended from the spacer (45) and which increases an insulation of the membrane (10) with respect to the substrate (20) by the spacer (45) and electrically contacts the radiation sensor (50).

15. Radiation detector (5) according to any one of the preceding claims, wherein the spacer (45) is arranged in a corner of the membrane (10).

16. Method for manufacturing a radiation detector (5), comprising:

    providing a substrate (20);
    applying a spacer (45) configured as a self-supporting hollow tube onto the substrate (20), the spacer including a first and a second electrically conductive layer (55, 60);
    suspending a membrane (10) from the spacer (45) above the substrate (20);
    forming a radiation sensor (50) in the membrane (10);
    contacting the first layer (55) of the spacer (45) with a first pole (57) of the substrate (20) and the radiation sensor (50);
    contacting the second layer (60) of the spacer (45) with a second pole (62) of the substrate (20) and the radiation sensor (50), the second pole differing in polarity from the first pole (57);
    insulating the first electrically conductive layer (55) from the second electrically conductive layer (60).

**Revendications**

1. Détecteur de rayonnement (5) avec un substrat (20) et une membrane (10) qui est suspendue au-dessus d'une entretoise (45) se présentant sous forme de tube creux indépendant au-dessus du substrat (20),

    dans lequel l'entretoise (45) isole thermiquement un capteur de rayonnement (50) formé dans la membrane (10) par rapport au substrat (20);
    dans lequel l'entretoise (45) comporte une première couche (55) qui est électriquement conductrice et entre en contact avec un premier pôle (57) du capteur de rayonnement (50) et du substrat (20);
    dans lequel l'entretoise (45) comporte une deuxième couche (60) qui est électriquement conductrice et est isolée électriquement par rapport à la première couche électriquement conductrice (55) et entre en contact avec un deuxième pôle (62) du capteur de rayonnement (50) et du substrat (20), où le deuxième pôle (62) diffère en polarité du premier pôle (57).

2. Détecteur de rayonnement (5) selon la revendication 1, dans lequel l'entretoise (45) est conçue pour isoler la membrane (10) de manière prédominante thermiquement par rapport au substrat (20).

3. Détecteur de rayonnement (5) selon l'une des revendications précédentes, dans lequel la première couche (55) qui est électriquement conductrice entre en contact électrique avec le premier pôle (57) dans un premier plan de métallisation (100) du substrat et dans lequel la deuxième couche (60) entre en contact électrique avec le deuxième pôle (62) dans un deuxième plan de métallisation (105).

4. Détecteur de rayonnement (5) selon l'une des revendications précédentes, dans lequel l'entretoise comporte une troisième couche (65) qui est disposée entre la première et la deuxième couche (55, 60), dans lequel la troisième couche (65) isole électriquement la première couche (55) de la deuxième couche (60).

5. Détecteur de rayonnement (5) selon l'une des revendications précédentes, dans lequel la membrane (10) est suspendue sans bretelle de l'entretoise (45).

6. Détecteur de rayonnement (5) selon l'une des revendications 1 à 4, dans lequel la membrane (10) est suspendue de l'entretoise (45) par l'intermédiaire d'une bretelle (22), dans lequel l'isolation thermique de la membrane (10) par rapport au substrat (20) a lieu principalement par l'entretoise (45).

7. Détecteur de rayonnement (5) selon l'une des revendications précédentes, dans lequel un réflecteur (35) est disposé entre le substrat (20) et la membrane (10).

8. Détecteur de rayonnement (5) selon la revendication 7, dans lequel la distance entre le réflecteur (35) et la membrane (10) est un multiple entier impair d'un quart d'une longueur d'onde principale à détecter.

9. Détecteur de rayonnement (5) selon l'une des revendications précédentes, dans lequel l'entretoise (45) est réalisée par ALD selon le procédé de couche de sacrifice.

10. Détecteur de rayonnement (5) selon l'une des revendications précédentes, dans lequel la superficie de section de l'entretoise (45) est, sur toute la longueur, inférieure ou égale à 7 $\mu$m$^2$ ou inférieure ou égale à 3 $\mu$m$^2$ ou inférieure ou égale à 0,8 $\mu$m$^2$.

11. Détecteur de rayonnement (5) selon l'une des revendications précédentes, dans lequel une longueur de l'entretoise (45) entre la membrane (10) et le substrat (20) est supérieure ou égale à 0,4 $\mu$m.

12. Détecteur de rayonnement (5) selon l'une des revendications précédentes, dans lequel l'épaisseur de couche maximale de la première, de la deuxième ou de la troisième couche (55, 60, 65) est inférieure ou égale à 1 $\mu$m.

13. Détecteur de rayonnement (5) selon l'une des revendications précédentes, dans lequel le rapport entre une longueur et une largeur de l'entretoise (45) est supérieur ou égal à 10 ou supérieur ou égal à 5 ou supérieur ou égal à 1.

14. Détecteur de rayonnement (5) selon l'une des revendications 1 à 4 ou 6 à 13, dans lequel le détecteur de rayonnement (5) comporte par ailleurs une bretelle (22) s'étendant latéralement par l'intermédiaire de laquelle la membrane (10) est suspendue à l'entretoise (45) et qui augmente une isolation de la membrane (10) par rapport au substrat (20) par l'entretoise (45) et entre en contact électrique avec le détecteur de rayonnement (50).

15. Détecteur de rayonnement (5) selon l'une des revendications précédentes, dans lequel l'entretoise (45) est disposée dans un coin de la membrane (10).

16. Procédé de fabrication d'un détecteur de rayonnement (5), aux étapes suivantes consistant à:

prévoir un substrat (20);
appliquer une entretoise qui se présente sous forme de tube creux indépendant (45), qui comporte une première et une deuxième couche électriquement conductrice (55, 60) sur le substrat (20);
suspendre une membrane (10) de l'entretoise (45) au-dessus du substrat (20);
former un détecteur de rayonnement (50) dans la membrane (10);
amener en contact la première couche (55) de l'entretoise (45) avec un premier pôle (57) du substrat (20) et du détecteur de rayonnement (50);
amener en contact la deuxième couche (60) de l'entretoise (45) avec un deuxième pôle (62) du substrat (20) et du capteur de rayonnement (50) différent en polarité du premier pôle (57);
isoler la première couche électriquement conductrice (55) de la deuxième couche électriquement conductrice (60).

FIG 1

FIG 2A

FIG 2B

EP 3 088 856 B1

FIG 3A

5

10

25

30

70b
55
65
60
70a
62

62

35

20

80a  57  80b  80a

72

# FIG 3B

EP 3 088 856 B1

FIG 3C

EP 3 088 856 B1

FIG 3D

FIG 4

FIG 5

FIG 6

EP 3 088 856 B1

FIG 7

5

50

10

62 57

a)

45

65

20

55

60

55
60
65

b)

55
60
65

c)

55

65

60

d)

55

65
60

e)

# FIG 8

900

Bereitstellen eines Substrats ⌐905

↓

Aufbringen eines Abstandshalters umfassend eine erste und eine zweite elektrisch leitfähige Schicht auf das Substrat ⌐910

↓

Aufhängen einer Membran an dem Abstandshalter oberhalb des Substrats ⌐915

↓

Bilden eines Strahlungssensor in der Membran ⌐920

↓

Kontaktieren der ersten Schicht des Abstands-halters mit einem ersten Pol des Substrats und des Strahlungssensors ⌐925

↓

Kontaktieren der zweiten Schicht des Abstands-halters mit einem sich von der Polarität des ersten Pols unterscheidenden zweiten Pol des Substrats und des Strahlungssensors ⌐930

↓

Isolieren der ersten elektrisch leitfähige Schicht von der zweiten elektrisch leitfähigen Schicht ⌐935

FIG 9

**FIG 10**

EP 3 088 856 B1

FIG 11

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1072875 B1
- DE 10129846 C1
- US 2014091217 A
- EP 2293034 A1